# FASCICULE DE BREVET EUROPEEN

(11) **EP 2 082 551 B1**
(45) Date de publication et mention de la délivrance du brevet: **19.04.2017**
(21) Numéro de dépôt: 07821987.0
(22) Date de dépôt: 29.10.2007
(51) Int. Cl.: H04L 29/06, H04L 12/22

(54) **PROCÉDÉ DE PARTAGE INTERACTIF TEMPS RÉEL DE DONNÉES MULTIMÉDIA SERVEUR ET RÉSEAU DE COMMUNICATION INTERACTIF TEMPS RÉEL**
VERFAHREN ZUM INTERAKTIVEN ECHZEIT-SHARING VON MULTIMEDIADATEN, INTERAKTIVER ECHZEIT-SERVER UND KOMMUNIKATIONSNETZ
METHOD OF REAL-TIME INTERACTIVE SHARING OF MULTIMEDIA DATA REAL-TIME INTERACTIVE SERVER AND COMMUNICATION NETWORK

(30) Priorité: 02.11.2006 FR 0654687
(43) Date de publication de la demande: 29.07.2009
(73) Titulaire: ALCATEL LUCENT, 92100 Boulogne-Billancourt (FR)
(72) Inventeur: DELEGUE, Gérard, 94230 Cachan (FR); MARILLY, Emmanuel, 91240 Saint-michel-sur-orge (FR)
(74) Mandataire: ALU Antw Patent Attorneys
(86) Numéro de dépôt international: PCT/EP2007/061633
(87) Numéro de publication internationale: WO 2008/052972

(56) Documents cités:
- EP-A- 1 376 309
- US-A1- 2004 254 934
- US-A1- 2005 066 219

## Description

L'invention a trait au domaine technique du multimédia.

De nos jours, avec l'utilisation de dispositifs comprenant des caméras numériques, les personnes produisent de plus en plus de données multimédia. Ils souhaitent pouvoir partager ces données avec d'autres personnes (famille, amis, équipe de sport, groupe de travail) et commenter en temps réel leurs données.

Un grand nombre de sites web permettent le partage des contenus multimédia. Toutefois, la consultation de documents multimédia n'y est pas interactive.

Les blogues (*Blog, Joueb* ou *Weblog*, mot valise issu de la contraction de web et de log) permettent également le partage de contenus multimédias. Les blogues sont des sites Internet d'expression libre et périodique, prenant la forme de textes, de liens hypertextes et/ou d'images publiées au fil de l'eau en ordre chronologique inverse, souvent par un auteur unique et à titre personnel. Les blogs personnels permettent à une personne d'afficher ses idées, ses humeurs au jour le jour, les visiteurs pouvant laisser une trace de leurs réactions vis-à-vis du contenu du blog. Le succès des blogs est très vif, à tel point que plusieurs moteurs de recherche leurs sont dédiés (par exemple Technorait, Feedster, Sphère). Il est estimé que le nombre de blogs double tous les six mois et qu'il en existe plusieurs dizaines de millions. L'utilisation la plus répandue du blog est le journal en ligne ou le carnet de voyage. Certains créent des blogs pour partager des passions, ou pour publier des photographies amateurs ou professionnelles. On connaît également des blogs d'opinion, tenus par des journalistes professionnels ou des politiques, ainsi que des blogs d'entreprises. Les blogs peuvent être mis à jour depuis des terminaux mobiles. Un blog contient en général les éléments suivants :
- les messages (*posts*) classés en ordre chronologique inverse,
- les archives du blog, consultables par date :
- la liste de liens externes (*blogroll*), cette liste matérialisant la reconnaissance mutuelle des auteurs de leur appartenance à une même communauté virtuelle ;
- le flux RSS (*Rich Site Summary, Really Simple Syndication*) fournissant une description, structurée par des balises, des différents éléments d'un blog: titres des messages, contenu, date, auteur, liens.
Les blogs présentent plusieurs inconvénients. Ils sont en principe consultables par n'importe quel internaute, et ne permettent en général pas la création de communautés virtuelles fermées ou à accès conditionnel. Le blogeur a la possibilité de prendre un faux nom et les pseudo sont fréquents. Le blogueur n'est pas visible et face à face avec son public. De plus, l'immense majorité des blogs ne permettent pas d'interactions en temps réel. Par ailleurs, les documents multimédia n'y sont pas correctement protégés contre les copies illégales.

La plateforme *Windows Live Spaces* de la société Microsoft couple les anciennes fonctionnalité de l'ancienne plateforme MSN Spaces au logiciel de messagerie instantanée MSN Messenger, un module *Friends Explorer* permettant aux utilisateurs d'inviter leurs amis, et d'entrer en relation avec les amis de leurs contacts. Windows Live Spaces permet la création d'espaces personnels et de communautés personnelles à accès conditionné ; le paramétrage par défaut limite à la liste d'amis *Windows Live Messenger* le droit d'accéder à l'espace de l'auteur des pages web, qui peut ainsi spécifier qui peut le contacter, qui peut consulter son profil et qui peut voir le contenu de son espace.

On connaît également des systèmes de visioconférences via internet (par exemple *WebeX Meeting Centrer, Microsoft Live Meeting, Citrix GoTo Meeting, Groove Virtual Office, ezmeeting*), ces systèmes ayant de nombreuses applications : par exemple télé-ingénierie, apprentissage à distance (*e-learning*), réunions de travail. La visioconférence est un service de téléconférence audiovisuel assurant le transfert bidirectionnel en temps réel de la voix et de l'image animée en couleur, ainsi que des données informatiques entre les groupes d'usagers situés dans au moins deux lieux distincts, en mode point à point ou multipoint. Le système de visioconférence VRVS (*Virtual Room Videoconferencing System*) permet par exemple de réserver des salles virtuelles de conférences sur le Mbone ou en protocole H323. Un terminal H323 est équipé d'un logiciel tel que par exemple Netmeeting de Mircrosoft ou *Ekiga*.

Les systèmes de visioconférence présentent des inconvénients. En particulier, les documents multimédia ne peuvent être vus en dehors d'une session, la session devant être ouverte avant la publication de documents multimédia.

La demanderesse a développé deux applications de télévision interactive sur IP : *AmigoTV* et *MyOwnTV*.

La technologie de télévision interactive appelée AmigoTV permet à l'utilisateur de partager au sein d'une communauté des opinions et des émotions. Lorsque plusieurs amis regardent le même programme de télévision, ils peuvent, grâce à AmigoTV, le commenter en direct entre eux, leurs voix passant par Internet, six personnes pouvant communiquer en même temps. Pour savoir qui est branché sur son téléviseur et la chaîne qu'il regarde, il suffit de consulter à l'aide de sa télécommande un menu où toutes ces informations s'affichent en temps réel, la présence des membres de la communauté étant indiquée par avatars en surimpression. AmigoTV permet également d'envoyer des images et des sons choisis au sein d'un catalogue, pour illustrer son humeur en réaction à un événement télévisé.

MyOwnTV est une autre offre *triple plat* centrée sur l'utilisateur, permettant aux utilisateurs de partager des contenus multimédias (photographies, vidéos) dans un cercle restreint, un service de vidéophonie intégrée devant permettre, à l'avenir, les dialogues au sein de la communauté virtuelle. Les contenus multimédias sont vus par les membres de la communauté a l'aide d'un ensemble téléviseur/décodeur. Avec cette solution, il n'y a pas d'interaction en temps réel et l'environnement mobile n'est pas pris en compte. La protection des données est assurée par authentification, il n'y a pas de moyens de contrôle de l'usage des documents et notamment leurs copies.

Le document US 6 301 607 décrit un dispositif et un procédé pour l'affichage et le partage d'images par Interne. Les images numériques (photos ou vidéos) sont envoyées à un serveur, un message électronique étant automatiquement envoyé à une liste de personnes sélectionnées par l'auteur de l'envoi, ce message automatique informant ces personnes du dépôt de nouvelles images sur le serveur. Des informations telles qu'adresse IP, numéro de téléphone, description des images peuvent être attachées aux images envoyées au serveur. Lorsqu'une personne clique sur une image, il déclenche une conversation téléphonique IP avec l'auteur.

US2005066219 divulgue un procédé de partage de données multimédia, selon lequel un propriétaire de données multimédia peut permettre à un visiteur d'accéder lesdits données.

L'invention vise à proposer un service permettant le partage de contenus multimédia au sein d'une communauté, ce service ne présentant pas les inconvénients de ceux existants.

A cette fin, l'invention se rapporte, selon un premier aspect, à un procédé de partage de données multimédia, ce procédé comprenant :
- une étape d'insertion de données multimédia dans un espace administré par un auteur ;
- une étape d'établissement, par l'auteur, d'une liste de personnes habilitées, ces personnes recevant un droit d'accès aux données multimédia contenues dans l'espace administré par l'auteur, ces personnes formant une communauté virtuelle;
- une étape d'authentification d'un visiteur requérant un accès à l'espace administré par l'auteur ;
- une étape d'information à l'auteur de l'identité du visiteur authentifié ;
ce procédé comprenant une étape de lancement automatique par l'auteur d'une session de communication interactive en temps réel avec le visiteur authentifié.

Par « interactif » on désigne ici la possibilité d'une communication à double sens entre l'auteur et le visiteur, Ainsi par exemple, le visiteur et l'auteur pourront se communiquer l'un à l'autre leurs émotions à la vue d'un document multimédia tel qu'une vidéo de vacances.

Par « temps réel » on désigne ici le fait que le traitement des données échangées entre l'auteur et le visiteur est effectué à une vitesse telle que le délai de traitement n'est pas sensible à l'auteur ou au visiteur, qui ont ainsi le sentiment de vivre une expérience commune. Il ne s'agit pas nécessairement d'un temps réel strict, dans lequel le non respect d'une contrainte temporelle entraîne un dysfonctionnement. Il s'agit avantageusement d'un temps réel souple, assurant une qualité de service optimum jusqu'à un temps de réponse prédéterminé, puis une qualité de service dégradée au-delà de ce temps de réponse.

Avantageusement, le procédé comprend une étape d'envoi a une liste de destinataires, d'un message les informant d'une insertion de données multimédia dans l'espace administré par l'auteur. Cette liste de destinataires peut comprendre des personnes ne faisant pas encore partie de la communauté virtuelle de l'auteur. Il pourra s'agir, par exemple, des amis d'un membre de la communauté.

Avantageusement, le procédé comprend une étape de définition, pour chaque donnée multimédia, de règles d'accès conditionnels d'une part et de Gestion des Droits Numériques (GDN) d'autre part. L'auteur pourra ainsi permettre ou non la copie ou la modification de ses données multimédia, pour tel ou tel visiteur de son espace, ou fixer par exemple un temps durant lequel une donnée peut être vue.

Avantageusement, le procédé comprend, avant le lancement de la session de communication une étape de navigation dans les données multimédia de l'auteur, par le visiteur authentifié, et une étape d'affichage, sur un terminal de l'auteur, des chemins suivis par le visiteur authentifié, lors de sa navigation. Avant l'établissement de la communication, l'auteur aura ainsi une idée des centres d'intérêts du visiteur.

Avantageusement, le procédé comprend une étape de communication, par le terminal du visiteur, de l'identité du visiteur associé à ce terminal, lorsque ce terminal n'est pas reconnu comme appartenant à l'un des membres de la communauté virtuelle.

L'invention se rapporte, selon un deuxième aspect, à un serveur pour la mise en oeuvre d'un procédé tel que présenté ci dessus, ce serveur comprenant une base de données contenant les données multimédia de l'auteur et des métadonnées associées. Avantageusement, les métadonnées comprennent des informations relatives aux accès conditionnels aux données multimédia ainsi que de gestion des droits numériques (GDN)

Avantageusement, un serveur de présence indique quelle adresse peut être de préférence utilisée pour l'auteur et envoie une notification à l'auteur à cette adresse, cette notification contenant l'identité du visiteur authentifié. L'auteur pourra ainsi être averti de toute visite, dans son espace virtuel, et ce qu'il soit en déplacement (le message lui parvient sur son terminal de communication mobile), ou chez lui (le message lui parvient par exemple sur son téléviseur ou son ordinateur de bureau).

Avantageusement, une fonction d'adaptation de données présente les contenus multimédia suivant notamment les capacités du terminal du visiteur et du réseau. La fonction adaptation des données adapte par exemple le format suivant des modèles de documents prédéfinis. Dans une mise en oeuvre avantageuse, les données vidéo sont codées selon un codec supporté par le terminal et la résolution des images est adaptée au caractéristiques du terminal, afin de réduire la bande passante réseau utilisée.

L'invention se rapporte, selon un troisième aspect, à un réseau comprenant un serveur tel que présenté ci dessus, ce réseau comprenant en outre un terminal associé à l'auteur et au moins un terminal associé à un visiteur (téléphone, PDA, ordinateur, décodeur...), une passerelle recevant les requêtes de visualisation des contenus multimédia de la base de données, à partir du terminal.

Avantageusement, une fonction navigation dans les données multimédia est intégrée dans les terminaux.

Avantageusement, les règles de gestion des droits numériques (GDN) sont intégrées dans les terminaux.

D'autres objets et avantages de l'invention apparaîtront à la lumière de la description faite ci-après en référence à la figure annexée représentant les principales fonctions d'un service selon l'invention, dans un mode de réalisation.

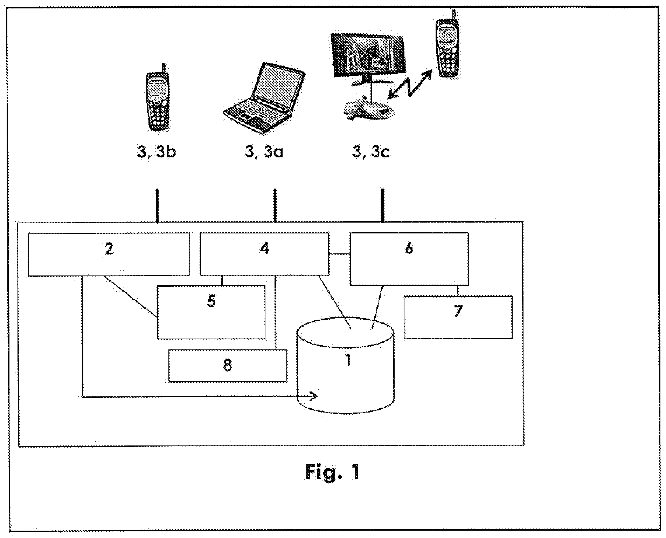

Ainsi qu'il apparaît en figure 1, le service de partage de données multimédia comprend une base de données 1 contenant les données multimédia et les métadonnées associées.

Par « données multimédia » on désigne ici en particulier des données numériques personnelles d'un auteur (personne physique, association, entreprise). Ces données multimédia peuvent être par exemple des photos ou des vidéos. Par « auteur », on désigne ici le créateur des données ou toute personne en droit de disposer de données multimédia d'un créateur.

Par « métadonnées » on désigne ici un ensemble d'informations associées aux données numériques.

Les métadonnées comprennent avantageusement les adresses des auteurs de données : par exemple email, numéros de téléphones, adresses IP.

Les métadonnées comprennent avantageusement une description des images : par exemple informations géographiques, date de prise de vue, informations touristiques. La présence de ces métadonnées facilite la navigation dans la base de données 1.

Les métadonnées comprennent avantageusement des informations relatives aux accès conditionnels aux données multimédia d'une part, et de règles de Gestion des Droits Numériques (GDN) d'autre part. Par exemple, l'auteur peut spécifier quelle communauté est en droit de voir les données et le cas échéant de les copier une ou plusieurs fois, voire de les modifier.

Une fonction téléchargement 2 permet d'ouvrir une session avec des dispositifs distants 3 (ordinateurs de bureau 3a, téléphones mobiles 3b, décodeur 3c, PDA *Personal Digital Assistants*).

Au commencement d'une session, le dispositif distant 3 est authentifié. Pour les dispositifs distants inconnus, une fonction requiert l'identité de l'utilisateur final avec ses différentes adresses (par exemple numéro de téléphone, *skype login, email*).

Une passerelle 4 reçoit les requêtes de visualisation des contenus multimédia de la base 1, à partir des terminaux 3. Une fonction navigation dans les données multimédia est intégrée dans les terminaux 3. L'utilisateur final peut ainsi sélectionner le nom d'une communauté et les critères optionnels pour filtrer les documents multimédia requis : par exemple par date,

La passerelle 4 est en charge de vérifier l'authenticité du terminal 3 et les autorisations associées à ce terminal en relation avec une fonction de gestion 5 des accès conditionnels d'une part et de gestion des droits numériques (DRM, GDN) d'autre part. Cette fonction 5 vérifie qu'un visiteur est autorisé à parcourir les contenus multimédia pour une communauté donnée. Cette fonction de gestion 5 est avantageusement en charge du contrôle des usages des documents, pour une protection efficace des droits d'auteur et copyrigths. Par exemple, un auteur de document peut spécifier que le document peut être copié ou non. Un auteur peut également spécifier la période durant laquelle le document peut être vu, ainsi que la communauté qui peut voir le document.

La passerelle 4 est en charge de notifier ou d'établir une communication avec l'auteur du contenu multimédia, avec la fonction 6 d'établissement d'une communication automatique. Cette fonction 6 permet d'établir automatiquement une session de communication entre une personne consultant le contenu multimédia et l'auteur de ce contenu. Cette fonction 6 retrouve les différentes adresses (email, numéros de téléphones, adresses IP) de l'auteur. Puis, elle demande à un serveur de présence 7 quelle adresse peut être de préférence utilisée et envoie une notification à l'auteur avec le nom du visiteur. La notification peut être affichée sur le PC, le téléphone mobile, ou la télévision.

La passerelle 4 est en charge d'appeler la fonction d'adaptation 8 de données, cette fonction d'adaptation 8 présentant les contenus multimédia en fonction de critères variés tels que : capacités du terminal et du réseau, volume de données, souhaits de l'utilisateur final. Le caractéristiques des images et vidéo peuvent être modifiées (résolution des images, nombre de couleurs, formats supportés). La fonction adaptation 8 des données adapte le format suivant des modèles de documents prédéfinis. Des exemples de modèles pour les photos peuvent être :
- un écran avec une table contenant des petites photos pour avoir une vue d'ensemble des photos ;
- un écran avec une grande image et des boutons pour télécharger l'image suivante ou précédente.

Pour les auteurs de documents publiés, une fonction présentation de données crée des petites icônes pour présenter les documents parcourus par les visiteurs et leur identité. Ces icônes donnent des informations en temps réel sur les documents parcourus et permettent de les commenter aisément et d'interagir avec les visiteurs.

La requête d'établissement de communication peut être déclenchée par l'auteur ou le visiteur avec un seul clic. Si l'appelé accepte la communication, la session est ouverte.

Lors de la session, l'auteur peut voir quel contenu fait l'objet de navigation par les visiteurs : des icônes générées par la fonction présentation de données et correspondant au contenu consulté sont envoyées à l'auteur. Les caractéristiques des droits numériques sont intégrées dans les terminaux pour une délivrance sure. Pour l'auteur de documents, cette fonction permet de détailler finement ce qui est vu à l'écran par les utilisateurs finaux : cette fonction notifie par exemple au serveur la photographie actuellement zoomée. Elle notifie aussi par exemple l'information vidéo (nom de la séquence vidéo, début du film, temps depuis le début du film, commande de pauses). Lorsqu'une communication est établie avec l'auteur du document, cette information est transférée à l'auteur. Avec cette information, les interactions entre l'auteur du document et le visiteur sont plus conviviales. De sorte que les émotions et les options peuvent être partagées en temps réel.

L'invention permet un accès aisé aux contenus multimédia à partir de terminaux variés. En particulier, la passerelle permet de naviguer dans les documents multimédia crées par une communauté à partir de terminaux variés (terminaux mobiles, ordinateur de bureau, télévision). Les documents peuvent être adaptés aux capacités du terminal ou du réseau.

L'invention permet d'établir une communication entre l'auteur du document multimédia et le visiteur à l'aide d'un simple clic.

L'invention permet une protection des contenus multimédia avec des fonctions avancées de gestion des droits numériques.

Pour le fournisseur de services, l'invention permet de proposer de nouveaux services attractifs. Plusieurs modèles de business peuvent être proprosés : l'auteur et le visiteur peuvent payer une taxe pour le service. Des publicités peuvent être ajoutées aux documents multimédia. Le service peut aussi générer du trafic supplémentaire.

## Revendications

1. Procédé de partage de données multimédia, ce procédé comprenant :
- une étape d'insertion de données multimédia dans un espace administré par un auteur ;
- une étape d'établissement, par l'auteur, d'une liste de personnes habilitées, ces personnes recevant un droit d'accès aux données multimédia contenues dans l'espace administré par l'auteur, ces personnes formant une communauté virtuelle;
- une étape d'authentification d'un visiteur requérant un accès à l'espace administré par l'auteur ;
- une étape d'information à l'auteur de l'identité du visiteur authentifié ;
ce procédé étant **caractérisé en ce qu'**il comprend
- une étape de présentation d'informations en temps réel sur les documents parcourus par les visiteurs et leur identité; et
- une étape d'établissement d'une session de communication interactive en temps réel entre le visiteur authentifié et l'auteur, une requête d'établissement de communication étant déclenchée par l'auteur avec un seul clic.

2. Procédé selon la revendication 1, **caractérisé en ce qu'**il comprend une étape d'envoi à une liste de destinataires, d'un message les informant d'une insertion de données multimédia dans l'espace administré par l'auteur.

3. Procédé selon la revendication 1 ou 2, **caractérisé en ce qu'**il comprend une étape de définition, pour chaque donnée multimédia, de règles d'accès conditionnels et de gestion des droits numériques (GDN).

4. Procédé selon l'une quelconque des revendications précédentes, **caractérisé en ce qu'**il comprend,
- avant le lancement de la session de communication une étape de navigation dans les données multimédia de l'auteur, par le visiteur authentifié ;
- une étape d'affichage, sur un terminal de l'auteur, des chemins suivis par le visiteur authentifié, lors de sa navigation.

5. Procédé selon l'une quelconque des revendications précédentes, **caractérisé en ce qu'**il comprend une étape de communication par le terminal visiteur, de l'identité du visiteur associé à ce terminal, lorsque ce terminal n'est pas reconnu comme appartenant à l'un des membres de la communauté virtuelle.

6. Serveur pour la mise en oeuvre d'un procédé tel que présenté dans l'une quelconque des revendications précédentes, **caractérisé en ce qu'**il comprend une base de données (1) contenant les données multimédia de l'auteur et des métadonnées associées.

7. Serveur selon la revendication 6, **caractérisé en ce que** les métadonnées comprennent des informations relatives aux accès conditionnels aux données multimédia ainsi que de gestion des droits numériques (GDN)

8. Serveur selon l'une quelconque des revendications 6 ou 7, **caractérisé en ce qu'**un serveur de présence (7) indique quelle adresse peut être de préférence utilisée pour l'auteur et envoie une notification à l'auteur à cette adresse, cette notification contenant l'identité du visiteur authentifié.

9. Serveur selon l'une quelconque des revendications 6 à 8, **caractérisé en ce qu'**il comprend une fonction d'adaptation (8) de données présentant les contenus multimédia en fonction notamment des capacités du terminal du visiteur et du réseau.

10. Serveur selon la revendication 9, **caractérisé en ce que** la fonction adaptation (8) des données adapte le format suivant des modèles de documents prédéfinis.

11. Réseau comprenant un serveur tel que présenté dans l'une quelconque des revendications 6 à 10, ce réseau comprenant en outre un terminal associé à l'auteur et un terminal (3) associé à un visiteur, une passerelle (4) recevant les requêtes de visualisation des contenus multimédia de la base de données (1), à partir du terminal (3) associé au visiteur.

12. Réseau selon la revendication 11, **caractérisé en ce qu'**une fonction navigation dans les données multimédia est intégrée dans les terminaux (3).

13. Réseau selon l'une quelconque des revendications 11 ou 12, **caractérisé en ce que** les règles de gestion des droits numériques (GDN) sont intégrées dans les terminaux.

## Patentansprüche

1. Verfahren zum Sharing von Multimediadaten, wobei dieses Verfahren Folgendes umfasst:
- einen Schritt des Einfügens von Multimediadaten in einen Raum, der von einem Verfasser verwaltet wird;
- einen Schritt des Erstellens einer Liste berechtigter Personen durch den Verfasser, wobei diese Personen ein Zugangsrecht zu den Multimediadaten erhalten, die in dem Raum enthalten sind, der von dem Verfasser verwaltet wird, wobei diese Personen eine virtuelle Gemeinschaft bilden;
- einen Schritt des Authentifizierens eines Besuchers, der einen Zugang zum Raum beantragt, der von dem Verfasser verwaltet wird;
- einen Schritt des Informierens des Verfassers über die Identität des authentifizierten Besuchers;
wobei dieses Verfahren **dadurch gekennzeichnet ist, dass** es Folgendes umfasst:
- einen Schritt des Präsentierens von Echtzeit-Informationen über die Dokumente, die von den Besuchern abgerufen werden, und ihre Identität; und
- einen Schritt des Herstellens einer interaktiven Kommunikationssitzung in Echtzeit zwischen dem authentifizierten Besucher und dem Verfasser, wobei eine Anfrage zur Kommunikationsherstellung von dem Verfasser mit nur einem Klick ausgelöst wird.

2. Verfahren nach Anspruch 1, **dadurch gekennzeichnet, dass** es einen Schritt des Sendens einer Nachricht an eine Liste von Empfängern umfasst, die sie über das Einfügen von Multimediadaten in den Raum informiert, der von dem Verfasser verwaltet wird.

3. Verfahren nach Anspruch 1 oder 2, **dadurch gekennzeichnet, dass** es einen Schritt des Definierens von Regeln für bedingte Zugriffe und die Verwaltung der digitalen Rechte (GDN) für jede Multimediaeingabe umfasst.

4. Verfahren nach einem beliebigen der vorstehenden Ansprüche, **dadurch gekennzeichnet, dass** es Folgendes umfasst:
- vor dem Start der Kommunikationssitzung, einen Schritt des Surfens in den Multimediadaten des Verfassers durch den authentifizierten Besucher;
- einen Schritt des Anzeigens der von dem authentifizierten Besucher bei seinem Surfen gefolgten Wege auf einem Endgerät des Verfassers.

5. Verfahren nach einem beliebigen der vorstehenden Ansprüche, **dadurch gekennzeichnet, dass** es einen Schritt des Mitteilens der Identität des Besuchers, der dem Besucherendgerät zugeordnet ist, durch dieses Endgerät umfasst, wenn dieses Endgerät nicht als zugehörig zu einem der Mitglieder der virtuellen Gemeinschaft erkannt wird.

6. Server für die Umsetzung eines Verfahrens, wie es in einem beliebigen der vorstehenden Ansprüche dargestellt ist, **dadurch gekennzeichnet, dass** er eine Datenbank (1) umfasst, welche die Multimediadaten des Verfassers und zugeordnete Metadaten enthält.

7. Server nach Anspruch 6, **dadurch gekennzeichnet, dass** die Metadaten Informationen in Bezug auf bedingte Zugriffe auf Multimediadaten sowie über die Verwaltung der digitalen Rechte (GDN) umfassen.

8. Server nach einem beliebigen der Ansprüche 6 oder 7, **dadurch gekennzeichnet, dass** ein Präsenzserver (7) angibt, welche Adresse für den Verfasser vorzugsweise verwendet werden kann, und eine Benachrichtigung an den Verfasser an diese Adresse sendet, wobei diese Benachrichtigung die Identität des authentifizierten Besuchers enthält.

9. Server nach einem beliebigen der Ansprüche 6 bis 8, **dadurch gekennzeichnet, dass** er eine Anpassungsfunktion (8) für Daten umfasst, welche die Multimediainhalte aufweisen, insbesondere in Abhängigkeit von den Fähigkeiten des Endgeräts des Besuchers und des Netzes.

10. Server nach Anspruch 9, **dadurch gekennzeichnet, dass** die Anpassungsfunktion (8) für Daten das Format gemäß Modellen vorausdefinierter Dokumente anpasst.

11. Netz, umfassend einen Server, wie er in einem beliebigen der Ansprüche 6 bis 10 dargestellt ist, wobei dieses Netz weiterhin ein Endgerät umfasst, das dem Verfasser zugeordnet ist, und ein Endgerät (3), das einem Besucher zugeordnet ist, wobei ein Gateway (4) die Anfragen für die Visualisierung von Multimediainhalten der Datenbank (1) ausgehend von einem Endgerät (3) empfängt, das dem Besucher zugeordnet ist.

12. Netz nach Anspruch 11, **dadurch gekennzeichnet, dass** eine Surffunktion in den Multimediadaten in den Endgeräten (3) integriert ist.

13. Netz nach einem beliebigen der Ansprüche 11 oder 12, **dadurch gekennzeichnet, dass** die Regeln für die Verwaltung der digitalen Rechte (GDN) in den Endgeräten integriert sind.

## Claims

1. A method for sharing multimedia data, comprising:
- a step of inserting multimedia data into a space administered by an author;
- a step of the author establishing a list of authorized people, those people receiving a right to access the multimedia data contained in the space administered by the author, those people forming a virtual community;
- a step of authenticating a visitor requesting access to the space administered by the author;
- a step of informing the author of the identity of the authenticated visitor;
this method being **characterized in that** it comprises a step of presenting information in real time about the documents perused by the visitors and their identities; and
- a step of establishing an interactive communication session in real time between the authenticated visitor and the author, a request to establish communication being triggered by the author with a single click.

2. A method according to claim 1, **characterized in that** it comprises a step of sending a message to a list of recipients informing them of an insertion of multimedia data into the space administered by the author.

3. A method according to claim 1 or 2, **characterized in that** it comprises a step of defining, for each item of multimedia data, rules for conditional access and digital rights management (DRM).

4. A method according to any one of the preceding claims, **characterized in that** it comprises:
- before the launch of the communication session, a step of browsing in the author's multimedia data, by the authenticated visitor;
- a step of displaying, on a terminal of the author, paths taken by the authenticated visitor when browsing.

5. A method according to any one of the preceding claims, **characterized in that** it comprises a step of the visitor terminal communicating the identity of the visitor associated with that terminal, when that terminal is not recognized as belonging to one of the members of the virtual community.

6. A server for implementing a method as presented in any one of the preceding claims, **characterized in that** it comprises a database (1) containing multimedia data of the author and associated metadata.

7. A server according to claim 6, **characterized in that** the metadata comprise information regarding the conditional access to multimedia data and digital rights management (DRM).

8. A server according to any one of the claims 6 or 7, **characterized in that** a presence server (7) indicates what address may preferentially be used for the author, and sends a notification to the author at that address, that notification containing the identity of the authenticated visitor.

9. A server according to any one of the claims 6 to 8, **characterized in that** it comprises a function for adapting (8) data exhibiting multimedia content, particularly based on the capabilities of the visitor's terminal and of the network.

10. A server according to claim 9, **characterized in that** the function for adapting (8) the data adapts the format based on predefined document templates.

11. A network comprising a server as presented in any one of the claims 6 to 10, said network further comprising a terminal associated with the author and a terminal (3) associated with a visitor, a gateway (4) receiving requests to view multimedia content of the database (1), from the terminal (3) associated with the visitor.

12. A network according to claim 11, **characterized in that** a multimedia data browsing function is incorporated into the terminals (3).

13. A network according to any one of the claims 11 or 12, **characterized in that** the digital rights management (DRM) rules are integrated into the terminals.
